# EUROPÄISCHE PATENTSCHRIFT

(11) **EP 3 461 707 B1**
(45) Veröffentlichungstag und Bekanntmachung des Hinweises auf die Patenterteilung: **16.06.2021**
(21) Anmeldenummer: 18194009.9
(22) Anmeldetag: 12.09.2018
(51) Int. Cl.: B60T 13/14, B60T 13/68

(54) **STEUERSYSTEM EINER HYDRAULISCH BETÄTIGTEN BREMSEINRICHTUNG**
CONTROL SYSTEM OF A HYDRAULICALLY OPERATED BRAKE DEVICE
SYSTÈME DE COMMANDE D'UN DISPOSITIF DE FREINAGE À COMMANDE HYDRAULIQUE

(30) Priorität: 29.09.2017 DE 102017122772
(43) Veröffentlichungstag der Anmeldung: 03.04.2019
(73) Patentinhaber: CLAAS Tractor S.A.S., 78141 Vélizy-Villacoublay Cedex (FR)
(72) Erfinder: Fedde, Thomas, 33129 Delbrück (DE)
(74) Vertreter: CLAAS Gruppe

(56) Entgegenhaltungen:
- EP-A1- 3 300 976
- DE-A1- 3 447 380
- DE-A1-102008 030 511
- DE-A1-102012 106 213

## Beschreibung

Die Erfindung betrifft ein Steuersystem einer hydraulisch betätigten Bremseinrichtung eines land- oder bauwirtschaftlich nutzbaren Fahrzeugs, wobei Bremseinrichtung einen Federspeicherbremszylinder mit einem mit Druckmittel beaufschlagbaren Druckraum aufweist, der über eine erste Ventileinheit und eine zweite Ventileinheit mit einer als Druckspeicher ausgeführten Druckquelle verbindbar ist.

Die Bremseinrichtung kann dabei als Feststell- und/oder Notbremseinrichtung genutzt werden. Feststellbremsen, die über eine automatische Betätigung verfügen und dabei elektronisch angesteuert werden, kommen zunehmend zur Komfortverbesserung an Traktoren zum Einsatz. Dabei ist von großer Bedeutung, dass die Bremsbetätigung nicht nur der Aufmerksamkeit des Fahrers überlassen wird, sondern abhängig von Situationen und Betriebszuständen des Traktors generell aktiviert wird. Von einem sich selbstständig in Bewegung setzenden Traktor gehen erhebliche Unfallgefahren aus, insbesondere dann, wenn der Fahrer im Heck- oder Frontbereich des Traktors an diesen Anbaugeräte an- oder abkuppelt sowie an diesen Anbaugeräten oder an den Kuppeleinrichtungen des Traktors Einstellungen vornimmt. Eine elektronisch ansteuerbare Feststellbremse ist außerdem von großer Bedeutung, wenn moderne Traktoren im Rahmen einer Leistungsverzweigung des Getriebes mit einem als CVT-Getriebe (Continuously Variable Transmission) versehen sind, so dass sich der Traktor im aktiven Stillstand bei nicht angetriebener Getriebeeingangswelle, also abgestellter Hubkolbenbrennkraftmaschine, in Bewegung setzen kann. Das kann beispielsweise auch dann der Fall sein, wenn die Hubkolbenbrennkraftmaschine aufgrund eines Kraftstoffmangels zum Stillstand kommt. Elektronisch ansteuerbare Feststellbremsen müssen daher hohe Anforderungen hinsichtlich ihrer funktionalen Sicherheit erfüllen, damit das Fahrzeug zum einen, wie dargelegt, sicher abgestellt werden kann, aber zum anderen auch die Feststellbremse nicht unbeabsichtigt während der Fahrt aktiviert wird, was zu unkontrollierbaren Fahrzuständen führen kann. Ein einfacher Fehler in der elektrohydraulischen Betätigung, bei dem zum Beispiel ein Bruch im Kabel eines Fahrzeug Kabelbaums auftritt, ist aufgrund des hohen Anteils an Straßenfahrten des Traktors, die dieser mit seiner hohen Gesamtmasse, zumeist mit Anhängern sowie einer hohen Geschwindigkeit durchführt, nicht akzeptabel. Von daher ist es von großer Bedeutung, dass die zumeist mit einem Federspeicherbremszylinder versehene Bremseinrichtung auch als Notbremseinrichtung verwendet werden kann, wenn die normale Betriebsbremse ausfällt oder deren Bremsmoment nicht ausreichend ist. Eine gattungsgemäße, hydraulisch betätigte, mit einem Federspeicherbremszylinder als Bremszuspanneinrichtung versehene Feststell- und/oder Notbremseinrichtung, ist aus der DE 10 2008 030 511 A1 bekannt. Diese Bremsanlage weist eine Lamellenbremse auf, die über ein in einem Federspeicherbremszylinder angeordnetes Federelement eingerückt wird, um ein Bremsmoment zu erzeugen. Dieses Bremsmoment kann dadurch aufgehoben werden, dass in einem Druckraum des Federspeicherbremszylinders ein entgegen der Kraft des Federelements wirkender Druck aufgebaut wird. Dieser Druckaufbau in dem Druckraum wird ausgehend von einer als Druckspeicher ausgebildeten Druckquelle über eine erste als 3/2-Wegeventil ausgebildete Ventileinheit gesteuert. Diese als Bremsbetätigungventil dienende erste Ventileinheit wird in beiden Stellrichtungen über eine elektronische Steuereinheit elektromagnetisch betätigt, wobei die Steuereinheit unter anderem mit einem durch den Fahrer manuell verstellbaren Schaltelement verbunden ist. Bei einem Ausfall dieser Stelleinrichtung kann es jedoch zu sicherheitskritischem Ausfall der Bremseinrichtung kommen. Eine ähnliche Bremseinrichtung wird in EP 3 300 976 A1 (Stand der Technik nach Artikel 54(3) EPÜ) offenbart. Es ist daher die Aufgabe der vorliegenden Erfindung, ein Steuersystem für eine hydraulisch betätigte Bremseinrichtung derart zu gestalten, dass die Funktionssicherheit der Bremseinrichtung, besonders deren Notbremsfunktion, verbessert werden kann. Diese Aufgabe wird, ausgehend von dem Oberbegriff des Patentanspruches 1 durch dessen kennzeichnende Merkmale gelöst. Vorteilhafte Ausgestaltungen sind in den abhängigen Patentansprüchen wiedergegeben, welche jeweils für sich genommen oder in Kombination miteinander einen Aspekt der Erfindung darstellen können.

Ein Steuersystem einer hydraulisch betätigten Bremseinrichtung eines land- oder bauwirtschaftlich nutzbaren Fahrzeugs, wobei die Bremseinrichtung einen Federspeicherbremszylinder mit einem mit Druckmittel beaufschlagbaren Druckraum aufweist, der über ein in zwei Schaltstellungen aktuierbares, über eine elektronische Steuereinrichtung steuerbare erste Ventileinheit in Form eines Bremsbetätigungsventils und eine zweite Ventileinheit mit einer als Druckspeicher ausgeführten Druckquelle verbindbar ist. Gemäß der Erfindung ist zur Betätigung der Bremseinrichtung bei in einer Durchflussstellung geschalteten ersten Ventileinheit die zweite Ventileinheit mittels einer Betätigungsvorrichtung betätigbar. Bei einer Betätigung der zweiten Ventileinheit mittels der Betätigungsvorrichtung verbleibt die erste Ventileinheit, welche die Feststellbremsfunktion gewährleistet, inaktiv. Durch die Betätigung der zweiten Ventileinheit, welche ausschließlich als Hilfsbremse einsetzbar ist, kann eine zuverlässige Notbremsfunktion der Bremseinrichtung unabhängig von der ersten Ventileinheit gewährleistet werden. Hierdurch kann die Funktionssicherheit der Bremseinrichtung, besonders deren Notbremsfunktion, verbessert werden.

In einer bevorzugten Ausgestaltung der Erfindung ist die zweite Ventileinheit als 3/3-Wegeventil ausgebildet ist, und eine Durchflussstellung, eine Sperrstellung und eine Ablaufstellung aufweist. Die Betätigungsvorrichtung und die zweite Ventileinheit sind nicht-festlegbar ausgebildet. Dies hat den Vorteil, dass eine reine Notbremsfunktion durch Betätigung der Betätigungsvorrichtung und/oder Aktivierung der zweiten Ventileinheit gewährleistet werden kann, ohne das die Gefahr besteht, dass die Bremseinrichtung dabei in einer Bremsstellung arretiert oder verharrt.

Eine Signalübertragung von der Betätigungsvorrichtung zu der zweiten Ventileinheit erfolgt dabei vorteilhafterweise mechanisch, elektrisch und/oder fluidisch. Hierdurch kann eine Signalübertragung gewählt werden, welche effektiv konstruktiv sinnvoll in das Fahrzeug integrierbar ist.

In einer weiterhin vorteilhaften Ausgestaltung der Erfindung ist die Betätigungsvorrichtung in Form eines, insbesondere ausschließlich, manuell betätigbaren Handhebels, Handtasters, oder Fußtasters, ausgebildet. Die Betätigungsvorrichtung ist dabei innerhalb der Kabine angeordnet. Durch die unterschiedlichen Ausgestaltungsformen kann die Betätigungsvorrichtung derart in die Kabine integriert werden, dass eine ergonomische und effektive Betätigung der Vorrichtung durch einen Bediener möglich ist, wodurch in einem Notfall ein zuverlässiges Bremsen des Fahrzeuges ermöglicht werden kann.

Bevorzugt ist das Bremsbetätigungsventil als 3/2-Wegeventil ausgebildet, welches in einer ersten Schaltstellung die Druckquelle mit dem Druckraum und in einer zweiten Schaltstellung den Druckraum mit einem Rücklauf verbindet. Eine Stelleinrichtung des Bremsbetätigungsventils ist vorteilhafterweise derart ausgebildet, dass diese das Bremsbetätigungsventil in zumindest einer seiner Schaltstellungen eigenstabil hält, so dass dessen Steuerschieber ohne eine weitere Bestromung der Stelleinrichtung in einer zuletzt eingestellten Schaltstellung verbleibt. Damit wird verhindert, dass äußere Kräfte eine Änderung der vorgegebenen Schaltstellung des Steuerschiebers hervorrufen. Derartige äußere Kräfte können beispielsweise durch Erschütterungen oder Bauteilbewegungen am Traktor, die beim Überfahren von Fahrbahnunebenheiten auftreten, auf die Stelleinrichtung und auch auf eine Rastiereinrichtung übertragen werden. Dies hat den Vorteil, dass durch die innerhalb der Stelleinrichtung vorgesehene Hemmung eine hohe Funktionssicherheit gewährleistet wird, da so die Gefahr von Schaltbewegungen des Steuerschiebers äußere Kräfte verringert wird.

Vorzugsweise ist das Bremsbetätigungsventil als bistabiles Wegeventil ausgeführt, dessen Steuerschieber ohne eine Bestromung seiner Stelleinrichtung in jeder seiner beiden zuletzt eingestellten Schaltstellungen verbleibt. Die Eigenstabilität kann dabei in einer oder in beiden Schaltstellungen, also auch bistabil wirken. Hierdurch kann die Funktionssicherheit weiter erhöht werden, da die Einflüsse äußerer Kräfte und daraus resultierender Schaltbewegungen weiter reduziert werden kann.

In weiterer Ausgestaltung der Erfindung ist vorgesehen, dass die Stelleinrichtung einen selbsthemmenden Antrieb aufweist. Dabei weist die Stelleinrichtung beispielsweise einen von der Steuereinrichtung angesteuerten Elektromotor auf, der ein hochübersetztes Getriebe rotatorisch antreibt. Dies hat den Vorteil, dass die Eigenstabilität bzw. Hemmung der Stelleinrichtung eine ungewollte Schaltbewegung der Ventileinheit verhindert, wodurch die Funktionssicherheit weiter erhöht werden kann.

Des Weiteren betrifft die Erfindung einen land- oder bauwirtschaftlich nutzbarer Traktor oder ein Systemfahrzeug mit einer hydraulisch betätigten Bremseinrichtung und mit mindestens einem wie vorstehend ausgebildeten und ausgestalteten Steuersystem.

Die Erfindung ist nicht auf die angegebene Kombination der Merkmale des unabhängigen Patentanspruches 1 mit den von diesem abhängigen Patentansprüchen beschränkt. Es ergeben sich darüber hinaus Möglichkeiten, einzelne Merkmale, soweit sie aus den Patentansprüchen, den Vorteilsangaben zu den Patentansprüchen, der nachfolgenden Beschreibung des Ausführungsbeispiels oder zumindest aus den Zeichnungen hervorgehen, miteinander zu kombinieren. Die Bezugnahme der Patentansprüche auf die Zeichnung durch entsprechende Verwendung vom Bezugszeichen soll den Schutzumfang der Patentansprüche nicht beschränken.

Zur weiteren Erläuterung der Erfindung wird auf die Zeichnung verwiesen, in der ein Ausführungsbeispiel der Erfindung vereinfacht dargestellt ist.

Es zeigt:

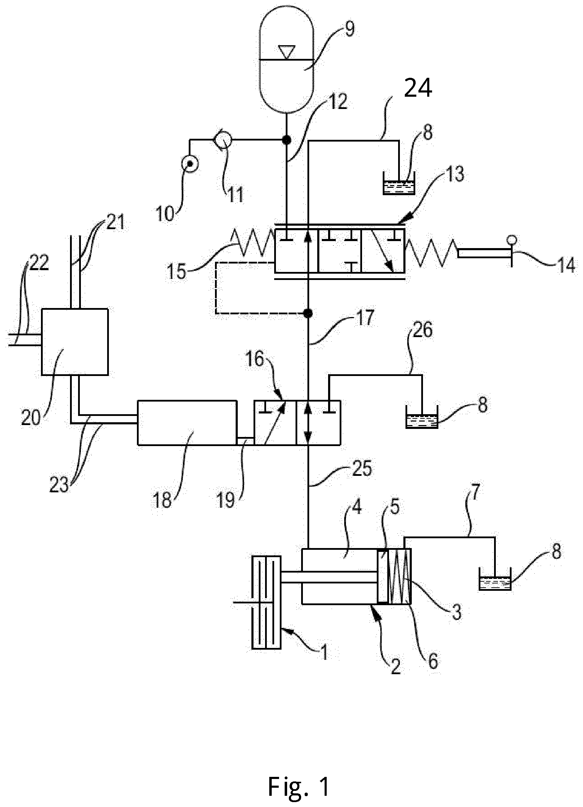

- Fig. 1: eine schematische Ansicht eines Steuersystems einer hydraulisch betätigten Bremseinrichtung eines land- oder bauwirtschaftlich nutzbaren Fahrzeugs, die über einen Federspeicherbremszylinder betätigbar ist, wobei ein zur Steuerung des Federspeicherbremszylinders vorgesehenes Bremsbetätigungsventil mittels einer erfindungsgemäß ausgebildeten Stelleinrichtung aktuiert wird.

In der Figur 1 ist eine Bremseinrichtung 1, insbesondere eine Feststell- und/oder Notbremseinrichtung, eines Traktors dargestellt, wobei die Bremseinrichtung 1 im vorliegenden Fall als Lamellenbremse ausgebildet ist. Diese wird über einen als Bremszuspanneinrichtung dienenden Federspeicherbremszylinder 2 ein- oder ausgerückt, wobei ein Einrücken über die Kraft einer Druckfeder 3 und ein Ausrücken über einen in einem Druckraum 4 wirkenden Druck, der einen Bremskolben 5 hydraulisch beaufschlagt, bewirkt werden. Ein Federraum 6 des Federspeicherbremszylinders 2 ist über eine Entlüftung 7 mit einem Tank 8 verbunden.

Das entsprechende dem Druckraum 4 zuzuführende hydraulische Druckmittel wird dabei für eine Bremsbetätigung über einen Druckspeicher 9, der aus einem Hydrauliksystem 10 des Traktors, beispielsweise der Arbeitshydraulik, über ein Rückschlagventil 11 befüllt wird, zur Verfügung gestellt. Von dem Druckspeicher führt eine Druckleitung 12 zu einer manuell betätigbaren zweiten Ventileinheit 13, welche in Form eines 3/3-Wegeventil ausgebildet ist. Die zweite Ventileinheit 13 ist mittels einer Betätigungsvorrichtung 14, hier in Form eines manuell betätigbaren Handhebels, entgegen der Kraft einer Rückstellfeder 15 in drei Schaltstellungen betätigbar.

Dem 3/3-Wegeventil 13 ist eine als Bremsbetätigungsventil 16 dienende erste Ventileinheit 16 in Form eines 3/2-Wegeventil 16 nachgeschaltet. Das 3/3-Wegeventil 13 und dass 3/2-Wegeventil 16 sind dabei über eine Arbeitsleitung 17 miteinander verbunden. Das als Bremsbetätigungsventil 16 dienende 3/2-Wegeventil 16 ist über eine Stelleinrichtung 18 betätigbar, die bewirkt, dass ein im Einzelnen nicht dargestellter Steuerschieber der ersten Ventileinheit 16 bzw. des 3/2-Wegeventil 16 in seinen Schaltstellungen eigenstabil ist. Die Stelleinrichtung 18 verstellt das 3/2-Wegeventil 16 über ein Gestänge 19 wahlweise in eine seiner beiden Schaltstellungen.

Die Stelleinrichtung 18 ist mit einer elektronischen Steuereinrichtung 20 verbunden, die ihrerseits in einen CAN-Bus 21 integriert ist, wobei an die Steuereinrichtung 18 unterschiedliche Daten des Traktors, wie z.B. über den Betriebszustand der Hubkolbenbrennkraftmaschine, Betriebszustand des Traktorgetriebes, Zustand der Feststellbremse, Besetzung der Kabine durch den Fahrer, Fehler im Bordnetz usw. übermittelt werden. Die Steuereinrichtung 20 weist eine Stromversorgung 22 auf. Von der Steuereinrichtung 20 führen Steuerleitungen 23 zur Stelleinrichtung 18, über die diese betätigt wird.

Gemäß der Erfindung kann die erste Ventileinheit 13 bzw. das 3/3-Wegeventil 13 durch Betätigung der Betätigungsvorrichtung 14 in eine erste Schaltstellung verbracht werden, in der es in Figur 1 dargestellt ist. In der ersten Schaltstellung der zweiten Ventileinheit 13 ist die Arbeitsleitung 17 über eine Rücklaufleitung 24 mit dem Tank 8 verbunden, also drucklos, während die Druckleitung 12 gesperrt ist Da sich die erste Ventileinheit 16 bzw. das 3/2-Wegeventil 16 in einer Durchflussstellung befindet, kann das Druckmittel aus dem Druckraum 4 in den Tank 8 ausströmen, so dass die Bremseinrichtung 1 eingerückt wird, der Traktor sich also gebremst wird. Hierdurch kann eine zuverlässige Notbremsfunktion der Bremseinrichtung 1 gewährleistet werden, welche ein manuelles Bremsen des Fahrzeuges, beispielsweise bei einem Ausfall der ersten Ventileinheit 16, ermöglicht.

Darüber hinaus kann die zweite Ventileinheit 13 bzw. das 3/3-Wegeventil 13 mittels der Betätigungsvorrichtung 14, insbesondere ausschließlich manuell, in eine Sperrstellung oder in eine Durchflussstellung verstellt werden. Das 3/2-Wegeventil 16 weist neben seiner in Figur 1 eingestellten Durchflussstellung, in der es die Arbeitsleitung 17 mit einer Bremsleitung 25 verbindet, eine Ablaufstellung ein, in der die Bremsleitung 25 mit einer Rücklaufleitung 26 verbunden ist.

### Bezugszeichen

- 1: Bremseinrichtung
- 2: Federspeicherbremszylinder
- 3: Druckfeder
- 4: Druckraum
- 5: Bremskolben
- 6: Federraum
- 7: Entlüftung
- 8: Tank
- 9: Druckspeicher
- 10: Hydrauliksystem des Traktors
- 11: Rückschlagventil
- 12: Druckleitung
- 13: 3/3-Wegeventil
- 14: Manuelle Betätigungsvorrichtung
- 15: Rückstellfeder
- 16: 3/2-Wegeventil
- 17: Arbeitsleitung
- 18: Stelleinrichtung
- 19: Gestänge
- 20: elektronische Steuereinrichtung
- 21: CAN-Bus
- 22: Stromversorgung
- 23: Steuerleitungen
- 24: Rücklaufleitung von 12
- 25: Bremsleitung
- 26: Rücklaufleitung von 16
- 28: Steuersystem

## Patentansprüche

1. Steuersystem für eine hydraulisch betätigte Bremseinrichtung (1) eines land- oder bauwirtschaftlich nutzbaren Fahrzeugs, wobei die Bremseinrichtung (1) einen Federspeicherbremszylinder (2) mit einem mit Druckmittel beaufschlagbaren Druckraum (4) aufweist, der über ein in zwei Schaltstellungen aktuierbares, über eine elektronische Steuereinrichtung (20) steuerbare erste Ventileinheit (16) in Form eines Bremsbetätigungsventils (16) und eine zweite Ventileinheit (13) mit einer als Druckspeicher (9) ausgeführten Druckquelle verbindbar ist, wobei zur Betätigung der Bremseinrichtung (1) bei in einer Durchflussstellung geschalteten ersten Ventileinheit (16) die zweite Ventileinheit (13) mittels einer Betätigungsvorrichtung (14) betätigbar ist,
**dadurch gekennzeichnet, dass**
die Betätigungsvorrichtung (14) und die zweite Ventileinheit (13) nicht-festlegbar ausgebildet sind.

2. Steuersystem nach Anspruch 1, **dadurch gekennzeichnet, dass** die zweite Ventileinheit (13) als 3/3-Wegeventil ausgebildet ist, und eine Durchflussstellung, eine Sperrstellung und eine Ablaufstellung aufweist.

3. Steuersystem nach einem der Ansprüche 1 oder 2, **dadurch gekennzeichnet, dass** eine Signalübertragung von der Betätigungsvorrichtung (14) zu der zweiten Ventileinheit (13) mechanisch, elektrisch und/oder fluidisch erfolgt.

4. Steuersystem nach einem der vorherigen Ansprüche, **dadurch gekennzeichnet, dass** die Betätigungsvorrichtung (14) in Form eines, insbesondere ausschließlich, manuell betätigbaren Handhebels, Handtasters, oder Fußtasters, ausgebildet ist.

5. Steuersystem nach einem der vorherigen Ansprüche, **dadurch gekennzeichnet, dass** das Bremsbetätigungsventil (16) als 3/2-Wegeventil ausgebildet ist, das in einer ersten Schaltstellung die Druckquelle (9) mit dem Druckraum (4) und in einer zweiten Schaltstellung den Druckraum (4) mit einem Rücklauf (26) verbindet.

6. Steuersystem nach einem der vorherigen Ansprüche, **dadurch gekennzeichnet, dass** eine Stelleinrichtung (18) des Bremsbetätigungsventils (16) derart ausgebildet ist, dass diese das Bremsbetätigungsventil (16) in zumindest einer seiner Schaltstellungen eigenstabil hält, so dass dessen Steuerschieber ohne eine weitere Bestromung der Stelleinrichtung (18) in einer zuletzt eingestellten Schaltstellung verbleibt.

7. Steuersystem nach einem der vorherigen Ansprüche, **dadurch gekennzeichnet, dass** das Bremsbetätigungsventil (16) als bistabiles Wegeventil ausgeführt ist, dessen Steuerschieber ohne eine Bestromung seiner Stelleinrichtung (18) in jeder seiner beiden zuletzt eingestellten Schaltstellungen verbleibt.

8. Steuersystem nach einem der vorherigen Ansprüche, **dadurch gekennzeichnet, dass** die Stelleinrichtung (18) einen selbsthemmenden Antrieb aufweist.

9. Land- oder bauwirtschaftlich nutzbarer Traktor oder Systemfahrzeug mit einer hydraulisch betätigten Bremseinrichtung und mit mindestens einem Steuersystem nach einem der Ansprüche 1 bis 8.

## Claims

1. A control system for a hydraulically operated brake device (1) of a vehicle which can be used in the agricultural or construction industry, wherein the brake device (1) has a spring loaded braking cylinder (2) with a pressure chamber (4) which can be charged with hydraulic medium, which can be connected, via a first valve unit (16) which can be actuated into two shift positions and which can be controlled by means of an electronic control device (20), the first valve unit being in the form of a brake actuation valve (16), and via a second valve unit (13), to a source of pressure configured as a pressure accumulator (9), wherein, in order to operate the brake device (1) when the first valve unit (16) is in a flow position, the second valve unit (13) can be operated by means of an operating means (14),
**characterized in that**
the operating means (14) and the second valve unit (13) are configured not to be fixable.

2. The control system according to claim 1, **characterized in that** the second valve unit (13) is configured as a 3/3 directional control valve, and has a flow position, a blocked position and an exhaust position.

3. The control system according to claim 1 or claim 2, **characterized in that** transmission of a signal from the operating means (14) to the second valve unit (13) takes place mechanically, electrically and/or fluidically.

4. The control system according to one of the preceding claims, **characterized in that** the operating means (14) is configured as, in particular exclusively as, a manually actuatable hand lever, manual switch or foot switch.

5. The control system according to one of the preceding claims, **characterized in that** the brake actuation valve (16) is configured as a 3/2 directional control valve which in a first shift position connects the pressure source (9) to the pressure chamber (4) and which in a second position connects the pressure chamber (4) to a return (26).

6. The control system according to one of the preceding claims, **characterized in that** a positioning device (18) of the brake actuation valve (16) is configured such that it holds the brake actuation valve (16) in at least one of its shift positions in an inherently stable manner, so that the slide valve thereof remains in a last set shift position without further energizing of the positioning device (18).

7. The control system according to one of the preceding claims, **characterized in that** the brake actuation valve (16) is configured as a bistable directional control valve, the slide valve thereof remaining in each of its two last set shift positions without energizing its positioning device (18).

8. The control system according to one of the preceding claims, **characterized in that** the positioning device (18) has a self-locking drive.

9. A tractor or system vehicle for the agricultural or construction industry, having a hydraulically actuatable brake device and with at least one control system according to one of claims 1 to 8.

## Revendications

1. Système de commande pour un équipement de freinage actionné hydrauliquement (1) d'un véhicule utilisable en agriculture ou dans les travaux publics, l'équipement de freinage (1) comportant un cylindre de freinage à ressort accumulateur (2) avec une chambre de pression (4) qui peut être soumise à de l'agent de pression et qui peut être reliée à une source de pression conformée en accumulateur de pression (9) par l'intermédiaire d'une première unité de valve (16) en forme de valve d'actionnement de frein (16) commandable par l'intermédiaire d'un équipement de commande électronique (20) et d'une seconde unité de valve (13), la seconde unité de valve (13) pouvant être actionnée au moyen d'un dispositif d'actionnement (14) pour actionner l'équipement de freinage (1) lorsque la première unité de valve (16) est commutée en position de passage, **caractérisé en ce que** le dispositif d'actionnement (14) et la seconde unité de valve (13) sont conçus de manière non blocable.

2. Système de commande selon la revendication 1, **caractérisé en ce que** la seconde unité de valve (13) est conformée en valve directionnelle à 3 voies/3 positions et comporte une position de passage, une position d'arrêt et une position d'écoulement.

3. Système de commande selon une des revendications 1 ou 2, **caractérisé en ce qu'**une transmission de signaux du dispositif d'actionnement (14) à la seconde unité de valve (13) s'effectue mécaniquement, électriquement et/ou fluidiquement.

4. Système de commande selon une des revendications précédentes, **caractérisé en ce que** le dispositif d'actionnement (14) est conçu sous la forme d'un levier manuel, d'un interrupteur manuel ou d'un interrupteur au pied.

5. Système de commande selon une des revendications précédentes, **caractérisé en ce que** la valve d'actionnement de frein (16) est conformée en valve directionnelle à 3 voies/2 positions qui, dans une première position de commutation, relie la source de pression (9) à la chambre de pression (4) et, dans une seconde position de commutation, relie la chambre de pression (4) à un moyen de retour (26).

6. Système de commande selon une des revendications précédentes, **caractérisé en ce qu'**un équipement de réglage (18) de la valve d'actionnement de frein (16) est conçu de façon qu'il maintienne à la valve d'actionnement de frein (16) une stabilité propre dans au moins une de ses positions de commutation, de façon qu'en l'absence de passage de courant dans l'équipement de réglage (18), son tiroir de commande conserve une position de commutation adoptée en dernier.

7. Système de commande selon une des revendications précédentes, **caractérisé en ce que** la valve d'actionnement de frein (16) est conformée en valve directionnelle bistable dont le tiroir de commande conserve chacune de ses deux positions de commutation adoptées en dernier en l'absence de passage de courant dans son équipement de réglage (18).

8. Système de commande selon une des revendications précédentes, **caractérisé en ce que** l'équipement de réglage (18) comporte un entraînement autobloquant.

9. Tracteur ou véhicule multitâche utilisable en agriculture ou dans les travaux publics, comprenant un équipement de freinage actionné hydrauliquement et comprenant au moins un système de commande selon une des revendications 1 à 8.
